# EUROPÄISCHE PATENTANMELDUNG

(11) **EP 0 555 499 A1**
(43) Veröffentlichungstag der Anmeldung: **18.08.1993**
(21) Anmeldenummer: 92102327.1
(22) Anmeldetag: 12.02.1992
(51) Int. Cl.: B27D 1/08, B27M 3/18

(54) **Verfahren zur Herstellung einer aus Holz bestehenden Möbelfrontplatte sowie nach diesem Verfahren hergestellte Möbelfrontplatte**

(71) Anmelder: VD-Werkstätten GmbH & Co. KG, D-32107 Bad Salzuflen (DE)
(72) Erfinder: Vietmeyer, Adolf, W-4902 Bad Salzuflen 1 (DE)
(74) Vertreter: Stracke, Alexander, Dipl.-Ing.

(57) **Zusammenfassung**

Gegenstand der Erfindung ist ein Verfahren zur Herstellung einer aus Holz bestehenden Möbelfrontplatte, wobei das Holz unter Druck und Wärmezufuhr verdichtet und zumindest im Bereich einer Oberfläche reliefartig verformt wird.

Erfindungsgemäß werden hier als Ausgangsmaterial Echtholzfurnierplatten (2) geringer Dicke verwendet, aus denen zunächst durch - bezüglich des Faserverlaufes der einzelnen Echtholzfurnierplatten (2) kreuzweises - Übereinanderlegen und Aufbringen von Leim zwischen je zwei aufeinanderliegenden Echtholzfurnierplatten (2) ein Stapel (1) gebildet wird, der anschließend durch die Verdichtung und Verformung unter gleichzeitiger Verbindung der einzelnen Echtholzfurnierplatten (2) miteinander zu einer Platte verpreßt wird.

Durch diese Verfahrensschritte wird eine Möbelfrontplatte erhalten, die in ihrem Kantenbereich keinerlei abschließender Randleisten oder anderer Zusatzteile oder Beschichtungen bedarf und wie eine massive Hausplatte mit allen herkömmlichen spanabhebenden Methoden bearbeitet werden kann.

## Beschreibung

Die vorliegende Erfindung bezieht sich auf ein Verfahren zur Herstellung einer aus Holz bestehenden Möbelfrontplatte, wobei das Holz unter Druck und Wärmezufuhr verdichtet und zumindest im Bereich einer Oberfläche reliefartig verformt wird.

Ein Verfahren der gattungsgemäßen Art ist aus der EP 0164650B1 bekannt.

Bei dem bekannten Verfahren wird als Ausgangsmaterial eine Spanplatte verwendet, auf die zumindest auf einer Seite eine Deckfolie oder ein Furnier aufgelegt wird. Anschließend wird unter Druck und Wärmezufuhr die Deckfolie oder das Furnier unter gleichzeitiger reliefartiger Oberflächenverformung der Spanplatte mit dieser verbunden.

Derartige Möbelfrontplatten haben sich in der Praxis grundsätzlich bewährt. Allerdings ist es bei derartigen Möbelfrontplatten erforderlich, an den Längs- und Querkanten Randleisten anzubringen oder entsprechende Kunststoffbeschichtungen aufzubringen.

Der vorliegenden Erfindung liegt die Aufgabe zugrunde, ein Verfahren der gattungsgemäßen Art aufzuzeigen, nach dem die Herstellung einer aus Holz bestehenden Möbelfrontplatte möglich ist, deren Längs- und Querkanten keiner zusätzlichen Abdeckung mehr bedürfen.

Diese Aufgabe wird erfindungsgemäß dadurch gelöst, daß als Ausgangsmaterial Echtholzfurnierplatten geringer Dicke verwendet werden, aus denen zunächst durch - bezüglich des Faserverlaufes der einzelnen Echtholzfurnierplatten kreuzweises - Übereinanderlegen und Aufbringen von Leim zwischen je zwei aufeinanderliegenden Echtholzfurnierplatten ein Stapel gebildet wird, der anschließend durch die Verdichtung und Verformung unter gleichzeitiger Verbindung der einzelnen Echtholzfurnierplatten untereinander zu einer Platte verpreßt wird.

Mit dem erfindungsgemäßen Verfahren wird eine Möbelfrontplatte erhalten, deren Längs- und Querkanten bedenkenlos mit spanabhebenden Mitteln in beliebigen Formgebungen endgültig bearbeitet werden können. Die erfindungsgemäß hergestellten Möbelfrontplatten bedürfen keinerlei zusätzlicher Kantenleisten oder Beschichtungen.

Dies liegt daran, daß im Kantenbereich jeweils abwechselnd Langholz- bzw. Stirnholzkanten der einzelnen Echtholzfurnierplatten liegen.Da die Echtholzfurnierplatten fest miteinander verleimt und darüber hinaus auch noch in gewissem Umfange verdichtet worden sind, werden mit üblichen Bearbeitungsmethoden glatte und stabile Seitenkanten erhalten.

Es sei darauf hingewiesen, daß selbstverständlich derartig hergestellte Möbelfrontplatten als endgültige Oberflächenschicht einen Lackauftrag erhalten.

Besonders zweckmäßig ist es, bei der Herstellung erfindungsgemäßer Möbelfrontplatten einen bis mindestens 120° hitzebeständigen Leim zu verwenden.

Die Verwendung eines derart hitzebeständigen Leimes ist aufgrund des beim Verdichten des Stapels ohnehin erforderlichen Druckes und der gleichzeitigen Wärmezufuhr ohne weiteres möglich und bringt den Vorteil mit sich, daß die fertige Möbelfrontplatte auch bei hoher Wärmebeaufschlagung in sich absolut stabil bleibt. Dies gilt insbesondere für den Kantenbereich, der bei Möbelfrontplatten, die nach bekannten Verfahren hergestellt wurden, in dieser Hinsicht unter Umständen problematisch war.

Besonders zweckmäßig ist es, wenn als unterste und/oder oberste Lage des Stapels ein Edelholzfurnier verwendet wird, während für die anderen Lagen Weichhölzer verwendet werden.

Eine derartige Zusammenstellung des Stapels ist sowohl im Hinblick auf die Kosten wie auch im Hinblick auf mögliche Verformungstiefen günstig und dennoch wird eine Möbelfrontplatte erhalten, die zumindest im unmittelbarem Sichtbereich den Charakter einer Edelholz-Frontplatte bietet.

Die Erfindung bezieht sich weiterhin auf eine nach dem Verfahren gemäß Anspruch 1 hergestellte Möbelfrontplatte.

Eine derartige Möbelfrontplatte ist dadurch gekennzeichnet, daß sie aus einer Vielzahl von kreuzweise miteinander verleimten Echtholzfurnierplatten besteht.

Weitere Merkmale der Erfindung sind Gegenstand weiterer Unteransprüche.

Anhand der beigefügten Zeichnungen wird die Erfindung im folgenden noch einmal ausführlich erläutert.

Im einzelnen zeigen:
- Figur 1: eine schematische Darstellung eines aus Echtholzfurnierplatten bestehenden Stapels zur Herstellung einer Möbelfrontplatte,
- Figur 2: die in Figur 1 mit II bezeichnete Einzelheit in vergrößerter Darstellung,
- Figur 3: eine Draufsicht auf eine erfindungsgemäß hergestellte Möbelfrontplatte,
- Figur 4: einen Eckbereich der Frontplatte gemäß Figur 3 in vergrößerter Darstellung,
- Figur 5: eine Ansicht in Richtung des Pfeiles V in Figur 3,
- Figur 6: eine Teilansicht einer Möbelfrontplatte mit einer vom Ausführungsbeispiel nach Figur 3 abweichenden Oberflächenverformung,
- Figur 7: eine Ansicht in Richtung des Pfeiles VII in Figur 6,
- Figur 8: eine Ansicht in Richtung des Pfeiles VIII in Figur 6.

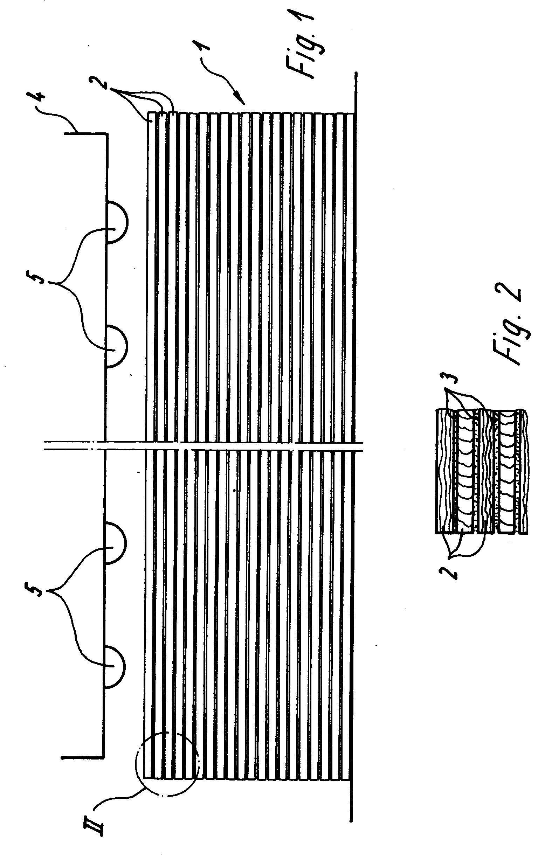

In Figur 1 ist mit dem Bezugszeichen 1 insgesamt ein Stapel bezeichnet, der aus einer Vielzahl von Echtholzfurnierplatten 2 besteht, die jeweils für sich gesehen relativ geringe Dicken aufweisen und die bezüglich ihres Faserverlaufes kreuzweise übereinandergelegt sind.

Zwischen je zwei aufeinanderliegenden Echtholzfurnierplatten 2 ist eine Leimschicht 3 angeordnet, was Figur 2 besonders deutlich macht. Der dieser Art gebildete Stapel 1 wird nun in einer entsprechenden Vorrichtung mit Hilfe eines Stempels 4, der in Figur 1 andeutungsweise gezeigt ist, zu einer Möbelfrontplatte verpreßt. Dabei wird in ansich bekannter Weise der gesamte Stapel 1 unter Druck und Wärmezufuhr verdichtet und durch den mit entsprechenden Vorsprüngen 5 versehenen Stempel 4 zumindest im Bereich einer Oberfläche reliefartig verformt.

Vorzugsweise werden Echtholzfurnierplatten 2 aus Weichhölzern verwendet.

Die jeweils unterste und/oder oberste Lage des Stapels 1 kann zweckmäßigerweise auch aus einem Edelholzfurnier bestehen.

Als Leimauftrag 3 wird vorzugsweise ein sehr hitzebeständiger Leim verwendet, der mindestens bis 120°C hitzebeständig ist.

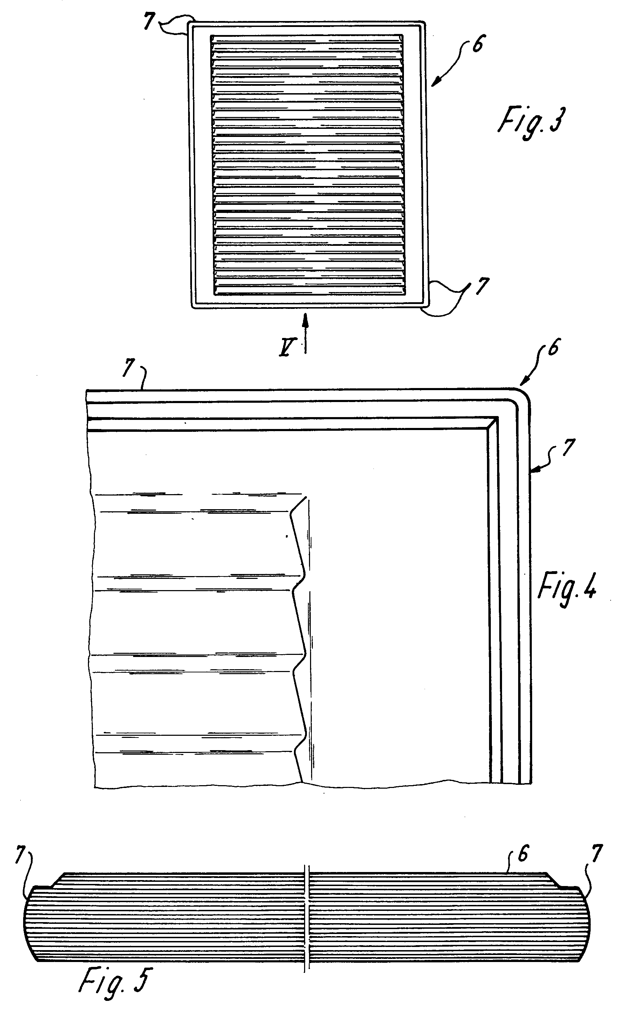

In den Figuren 3 bis 5 ist eine Möbelfrontplatte 6 dargestellt, die in der vorstehend skizzierten Weise hergestellt worden ist. Diese Frontplatte 6 kann dann in ihrem Kantenbereich 7 mit spanabhebenden Bearbeitungsmethoden bearbeitet werden, sowie dies der gewünschten Formgebung im Kantenbereich 7 entspricht. Das Anleimen von Kantenleisten oder das Beschichten mit Kunststoff ist entbehrlich.

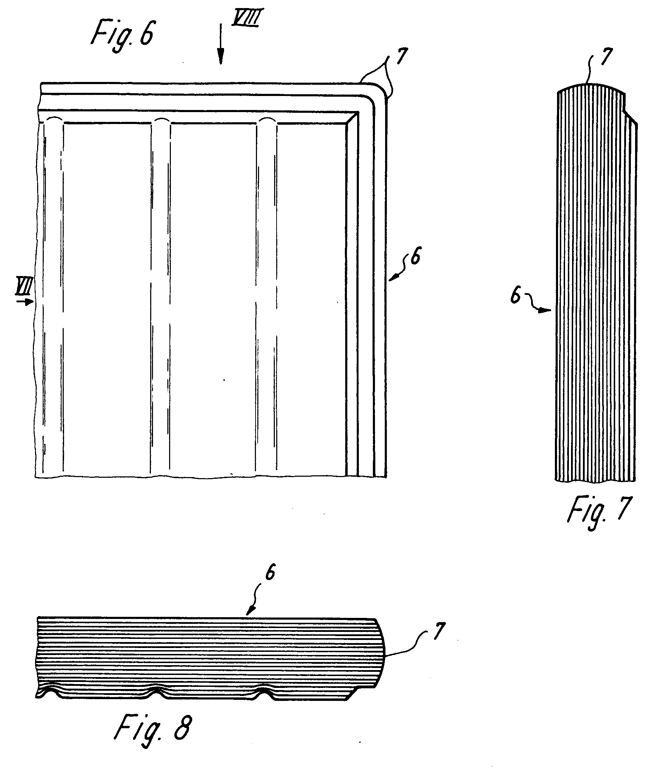

In den Figuren 6 bis 8 ist eine Möbelfrontplatte 6 dargestellt, die mit Hilfe eines Stempels 4 gemäß Figur 1 hergestellt worden ist.

Vorzugsweise besteht der Stapel 1 aus einer ungeradzahligen Anzahl von Echtholzfurnierplatten 2, da auf diese Weise sichergestellt ist, daß der Faserverlauf der jeweils untersten Lage dem Faserverlauf der jeweils obersten Lage des Stapels 1 und damit auch der fertigen Möbelfrontplatte 6 entspricht. Der wesentlichste Vorteil des erfindungsgemäßen Verfahrens, welches letztendlich darauf basiert, als Ausgangsmaterial für eine herzustellende Möbelfrontplatte 6 Echtholzfurnierplatten mit geringer Dichte zu verwenden, besteht darin, daß ein Endprodukt, nämlich eine Möbelfrontplatte 6 erhalten wird, die im Kantenbereich 7 wie eine massive Holzplatte endgültig bearbeitet werden kann.

## Patentansprüche

1. Verfahren zur Herstellung einer aus Holz bestehenden Möbelfrontplatte, wobei das Holz unter Druck und Wärmezufuhr verdichtet und zumindest im Bereich oder Oberfläche reliefartig verformt wird, **dadurch gekennzeichnet,** daß als Ausgangsmaterial Echtholzfurnierplatten (2) geringer Dicke verwendet werden, aus denen zunächst durch - bezüglich des Faserverlaufes der einzelnen Echtholzfurnierplatten kreuzweises - Übereinanderlegen und Aufbringen von Leim (3) zwischen je zwei aufeinanderliegenden Echtholzfurnierplatten (2) ein Stapel (1) gebildet wird, der anschließend durch die Verdichtung und Verformung unter gleichzeitiger Verbindung der einzelnen Echtholzfurnierplatten (2) untereinander zu einer Platte verpreßt wird.

2. Verfahren nach Anspruch 1, dadurch gekennzeichnet, daß ein bis mindestens 120°C hitzebeständiger Leim (3) verwendet wird.

3. Verfahren nach Anspruch 1 oder 2, dadurch gekennzeichnet, daß als unterste und/oder oberste Lage des Stapels (1) ein Edelholzfurnier verwendet wird, während für die anderen Lagen Weichhölzer verwendet werden.

4. Verfahren nach einem oder mehreren der Ansprüche 1 bis 3, dadurch gekennzeichnet, daß eine ungeradzahlige Anzahl von Echtholzfurnierplatten (2) verwendet wird.

5. Nach dem Verfahren gemäß Anspruch 1 oder einem oder mehreren der nachfolgenden Ansprüche hergestellte Möbelfrontplatte, dadurch gekennzeichnet, daß sie aus einer Vielzahl von kreuzweise miteinander verleimten Echtholzfurnierplatten (2) besteht.

6. Möbelfrontplatte nach Anspruch 5, dadurch gekennzeichnet, daß die jeweils unterste und/oder oberste Lage aus einem Edelholzfurnier besteht.

7. Möbelfrontplatte nach Anspruch 5 oder 6, dadurch gekennzeichnet, daß die Anzahl der übereinanderliegenden Echtholzfurnierplatten (2) ungeradzahlig ist.
